# EUROPÄISCHE PATENTSCHRIFT

(11) **EP 3 234 059 B1**
(45) Veröffentlichungstag und Bekanntmachung des Hinweises auf die Patenterteilung: **27.06.2018**
(21) Anmeldenummer: 15817112.4
(22) Anmeldetag: 10.12.2015
(51) Int. Cl.: C09J 183/12, C08L 83/12

(54) **STRAHLENHÄRTBARE BESCHICHTUNGSMASSEN AUS MEHREREN KOMPONENTEN UND IHRE VERWENDUNG IN TRENNBESCHICHTETEN SUBSTRATEN**
RADIATION-CURABLE COATING COMPOUNDS CONSISTING OF A PLURALITY OF COMPONENTS, AND THE USE OF SAME IN RELEASE-COATED SUBSTRATES
MATIÈRES DE REVÊTEMENT À PLUSIEURS COMPOSANTS, DURCISSABLES PAR RAYONNEMENT, ET LEUR UTILISATION DANS DES SUBSTRATS À REVÊTEMENT ANTI-ADHÉSIF

(30) Priorität: 18.12.2014 WO PCT/EP2014/078393
(43) Veröffentlichungstag der Anmeldung: 25.10.2017
(73) Patentinhaber: Evonik Degussa GmbH, 45128 Essen (DE)
(72) Erfinder: DOEHLER, Hardi, 45145 Essen (DE); BRAND, Mike, 45356 Essen (DE)
(86) Internationale Anmeldenummer: PCT/EP2015/079237
(87) Internationale Veröffentlichungsnummer: WO 2016/096595

(56) Entgegenhaltungen:
- EP-A2- 0 469 613
- JP-A- 2009 026 432
- US-A- 5 853 520
- US-B1- 6 207 782

## Beschreibung

Zusammensetzungen enthaltend mindestens ein Siloxan, welches ethylenisch ungesättigte, radikalisch polymerisierbaren Gruppen aufweist, sowie enthaltend mindestens einen Kohlenwasserstoff der 2 bis 6 ethylenisch ungesättigte, radikalisch polymerisierbare Gruppen aufweist, welche bei Verwendung als Trennbeschichtung ein gutes Trennverhalten, gegen klebende Massen ermöglicht, gleichzeitig auch eine gute Haftung der Beschichtung zum Trägermaterial erreichen.

Polysiloxane, die (Meth)Acrylatsäureestergruppen enthalten, haben sich als unter energiereicher Strahlung härtbare Bindemittel, zum Beispiel als Beschichtungsmittel für Kunststoff- und Papieroberflächen, bewährt. Die Härtung erfolgt insbesondere durch UV-Strahlung (nach Zusatz bekannter Photoinitiatoren) oder durch Elektronenstrahlung. (Meth)Acrylatmodifizierte Organosiloxane sind in zahlreichen Patentschriften beschrieben, zum Beispiel in US6211322 und US4978726.

(Meth)Acrylatmodifizierte Organosiloxane können dreidimensional durch freie Radikale vernetzt werden und härten thermisch unter Zusatz von z. B. Peroxiden oder unter Einfluss energiereicher Strahlung, wie UV- oder Elektronenstrahlung, innerhalb kürzester Zeit zu mechanisch und chemisch widerstandsfähigen Schichten aus. Wird als Strahlungsquelle UV-Licht verwendet, erfolgt die Vernetzung vorzugsweise in Anwesenheit von Photoinitiatoren und/oder Photosensibilisatoren, wie z. B. Benzophenon und dessen Derivaten, Benzoinderivate, alpha-Hydroxyalkylphenone und Derviate sowie Acylphosphineoxid und Derivate. Übliche Photoinitiatore werden beschrieben in "A Compilation of Photoinitiators Commercially available for UV today" (K. Dietliker, SITA Technology Ltd, London 2002).

Unverzweigte Polysiloxane können an den beiden endständigen Siloxydimethyleinheiten oder an einer bzw. mehreren Siloxymethyleinheiten in der Siloxankette modifiziert sein. Man spricht demgemäß von endständig bzw. seitenständig modifizierten Polysiloxanen. Die Modifizierung kann auch sowohl endständig als auch seitenständig sein, im Weiteren werden diese zu den seitenständig modifizierten gezählt.

Abhäsive Beschichtungen auf flächigen Trägern, z. B. für die Anwendung in Klebebändern oder Etikettenlaminaten, sollen sich einerseits durch niedrige Trennwerte, deren Trennwert mit der Zeit unverändert bleiben, und andererseits durch hohe Haftung auf dem Trägermaterial auszeichnen.

Abhäsive Beschichtungen aus endständig (meth)acrylatmodifizierten Organopolysiloxanen, zeichnen sich durch niedrige Trennwerte aus, wenn die Siloxankette genügend groß ist. Solche Polysiloxane verfügen über einen hohen Siliconcharakter, der nicht durch organische Modifizierungen innerhalb der Siloxankette unterbrochen wird. Die Haftung auf dem Trägermaterial ist allerdings unbefriedigend.

Zur Erreichung einer guten Haftung zum Substrat ist eine höhere Modifizierungsdichte mit polaren und/oder reaktiven Gruppen notwendig. Diese kann mit ausschließlich endständig modifizierten Siloxanen nur schwer erreicht werden, da die Siloxankette entsprechend verkürzt werden müsste.

Solche kurzkettigen endständig modifizierten Polysiloxane sind vergleichsweise teuer, weshalb ihr Einsatz unwirtschaftlich wäre. Zudem ist der Trennwert solcher Siloxane gegen klebende Massen unbefriedigend erhöht.

Seitenständig (meth)acrylatmodifizierte Organosiloxane können dagegen in ihrer Modifizierungsdichte über weite Bereiche hinweg unabhängig vom Molekulargewicht variiert werden. Da seitenständige (Meth)acrylatgruppen aufgrund ihrer sterischen Hinderung weniger reaktiv sind, besteht die Gefahr, dass nicht alle Gruppen bei der Polymerisation vollständig reagieren. Solche überbleibenden, unvernetzten Acrylatgruppen können dann Folgereaktionen, z. B. mit dem Haftklebstoff eines Etikettenlaminates, eingehen, was zu einem Anstieg der Trennwerte über die Zeit führen würde.

US5853520 offenbart eine Klebstoffzusammensetzung, die ein Silikon/Acrylat und eine organische Acrylatverbindung enthält. Das offenbarte Harz ist hochgradig mit Methacrylgruppen substituiert.

US6207782 offenbart Zusammensetzungen hydrophobe acrylatmodifizierte kleine Siloxane als Zusatzstoff in Kosmetika.

EP0469613 offenbart sehr große, hydrophob substituierte vinylgruppenhaltige Siloxane, die nicht stahlenhärtbar sind.

Die US6268404 offenbart die kombinierte Anwendung von seitenständig und endständig (meth)acrylatmodifizierten Organopolysiloxanen. Ziel solcher Mischungen ist es, die Vorteile der Einzelkomponenten zu verbinden und dabei die Nachteile zu unterdrücken. Insbesondere auf glatten Foliensubstraten sind jedoch die Mischungen der US6268404 in Bezug auf die Haftung nicht ausreichend bei gleichzeitig niedriger Trennwirkung.

Neben den beschriebenen (meth)acrylatmodifizierten Organopolysiloxan sind strahlenhärtende Beschichtungen auf rein organischer Basis bekannt und beispielsweise in European Coatings Tech Files; Patrick Glöckner et al. "Radiation Curing Coatings and printing inks", 2008, Vincentz Network, Hannover, Germany, beschrieben.

Solche rein organischen Beschichtungsmassen weisen eine gute Verankerung zu vielen Substraten auf und können (meth)acrylatmodifizierten Organopolysiloxanen beigemischt werden. Jedoch hat sich gezeigt, dass die niedrigen Trennwerte und die lange Stabilität der Trennwirkung der (meth)acrylatmodifizierten Organopolysiloxane durch solche Beimischungen maßgeblich verschlechtert werden.

EP1276825B (US6548568B1) offenbart mindestens binäre, bevorzugt mindestens ternäre Mischungen von (meth)acrylatmodifizierten Organopolysiloxan als Antihaftzusammensetzungen, die sich vor allem durch unterschiedliche Kettenlängen der Polydimethylsiloxaneinheit unterscheiden. Zur Überwindung des Problems der mangelnden Haftung dieser Zusammensetzungen auf kunstoffpolymeren Trägern kann optional ein Haftvermittler eingesetzt werden, welcher ein beliebiges Acrylatgruppen oder Vinylethergruppen haltiges Polymer sein kann, bevorzugt ein Gemisch aus Dipentaerythritolpentacrylat und 1,6-Hexandioldiacrylat. Ein Vorteil der Beimischung des Additives ist durch keins der Beispiele für keinen der Parameter offenbart.

Der Erfindung lag deshalb die Aufgabe zugrunde Beschichtungsmassen bereitzustellen, die zumindest einen Nachteil des Standes der Technik überwinden kann. Es soll eine Beschichtungsmasse formuliert werden, die sehr niedrige Trennwerte, also hervorragendes Trennverhalten, gegen klebende Massen ermöglicht, gleichzeitig aber eine hervorragende Haftung der Beschichtung zum Trägermaterial erreicht.

Überraschenderweise wurde gefunden, dass Zusammensetzungen enthaltend mindestens ein Siloxan, welches ethylenisch ungesättigte, radikalisch polymerisierbaren Gruppen aufweist sowie mindestens einen Kohlenwasserstoff der 2 bis 6 ethylenisch ungesättigte, radikalisch polymerisierbare Gruppen aufweist wie in den Ansprüchen beschrieben, diese Aufgabe lösen.

Gegenstand der vorliegenden Erfindung sind deshalb Zusammensetzungen enthaltend die Komponenten (I), (II) und optional (III)
(I) 1 bis 90 Gew.-% bezogen auf die Summe aller Komponenten der Zusammensetzung eines oder mehrere Kohlenwasserstoffe, bestehend aus den Elementen Kohlenstoff, Wasserstoff und Sauerstoff, der 2 bis 6 ethylenisch ungesättigte, radikalisch polymerisierbare Gruppen und mindestens eine Oxyethylengruppe aufweist,
(II) 10 bis 99 Gew.-% bezogen auf die Summe alle Komponenten der Zusammensetzung, eines oder mehrerer organomodifizierter Silicone mit 50 bis 500, bevorzugt 60 bis 300, mehr bevorzugt 70 bis 200, insbesondere bevorzugt 80 bis 180 Siliziumatomen, wobei 0,4 bis 10%, bevorzugt 0,6 bis 8% und mehr bevorzugt 0,8 bis 7 % der Siliziumatome ethylenisch ungesättigte, radikalisch polymerisierbare Gruppen, wobei ein Siliziumatom ein, zwei oder drei solcher Gruppen tragen kann,
(III) 0 bis 70 Gew.-% bezogen auf die Summe alle Komponenten der Zusammensetzung eines oder mehrerer organomodifizierter Silicone mit 4 bis 40, bevorzugt 10 bis 30 Siliziumatomen, wobei 15 bis 100%, bevorzugt 20 bis 50% der Siliziumatome ethylenisch ungesättigte, radikalisch polymerisierbare Gruppen aufweisen,
wobei Komponente (I) bevorzugt frei von Siliziumatomen ist.

Weiter bevorzugt weisen die Kohlenwasserstoffe der Komponenten (I), (II) und (III) als ethylenisch ungesättigte, radikalisch polymerisierbare Gruppen solche ausgewählt aus Acryl- und/oder Methacrylsäure Esterfunktionen, besonders bevorzugt Acrylsäure Esterfunktionen auf.

Bevorzugt weist die erfindungsgemäße Zusammensetzung die Komponente (I) zu 2 bis 50 Gew.-%, mehr bevorzugt 3 bis 30 Gew.-% bezogen auf die Summe aller Komponenten der Zusammensetzung auf.

Bevorzugt weist der Kohlenwasserstoff der Komponente (I) pro ethylenisch ungesättigte, radikalisch polymerisierbare Gruppe 1 bis 25, bevorzugt 1 bis 5 Oxyethylengruppen auf, besonders bevorzugt pro Acryl- und/oder Methacrylsäure Esterfunktion 1 bis 25, bevorzugt 1 bis 5 Oxyethylengruppen.

Weiter bevorzugt weist der Kohlenwasserstoff der Komponente (I) neben der mindestens einen Oxyethylengruppe auch noch Oxypropylengruppen auf, wobei mehr bevorzugt die Anzahl der Oxypropylengruppen niedriger als die der Oxyethylengruppen ist, besonders bevorzugt lediglich höchstens 20 % der Oxyalkylgruppen keine Oxyethylengruppen sind, bezogen auf die Gesamtzahl der Oxyalkylgruppen der Komponente (I).

Mehr bevorzugt weist die erfindungsgemäße Zusammensetzung die Komponente (I) zu 3 bis 30 Gew.-% bezogen auf die Summe aller Komponenten der Zusammensetzung auf wobei der Kohlenwasserstoff der Komponente (I) pro Acryl- und/oder Methacrylsäure Esterfunktion 1 bis 5 Oxyethylengruppen aufweist.

Bevorzugt weist die erfindungsgemäße Zusammensetzung die Komponente (II) zu 20 bis 98 Gew.-%, 40 bis 95 Gew.-%, 40 bis 90 Gew.-%, 50 bis 85 Gew.-% und insbesondere bevorzugt 60 bis 80 Gew.-% bezogen auf die Summe aller Komponenten der Zusammensetzung auf.

Bevorzugt weist die erfindungsgemäße Zusammensetzung die Komponente (III) 5 bis 50 Gew.-%, mehr bevorzugt 10 bis 40 Gew.-% bezogen auf die Summe aller Komponenten der Zusammensetzung auf.

Bevorzugt sind die Komponenten (II) und/oder (III), die neben den ethylenisch ungesättigten, radikalisch polymerisierbaren Gruppen auch noch nicht radikalisch polymerisierbare Gruppen enthalten. Bevorzugt sind die nicht radikalisch polymerisierbaren Estergruppen ausgewählt aus den Säureresten der Säuren Essigsäure, Propionsäure, Buttersäure, Valeriansäure und Benzoesäure, besonders bevorzugt Essigsäure.

Mehr bevorzugt sind die nicht radikalisch polymerisierbare Gruppen Estergruppen ausgewählt aus den Säureresten der Säuren Essigsäure, Propionsäure, Buttersäure, Valeriansäure und Benzoesäure, besonders bevorzugt Essigsäure und die ethylenisch ungesättigten, radikalisch polymerisierbaren Gruppen sind Acryl- und/oder Methacrylsäure Esterfunktionen.

Wobei die nicht radikalisch polymerisierbaren Estergruppen in Komponente (III) zu einem numerischen Anteil bevorzugt von 3 bis 20 %, mehr bevorzugt 5 bis 15 % bezogen auf die Anzahl aller Esterfunktionen in Komponente (III) enthalten sind.

Wobei die nicht radikalisch polymerisierbaren Estergruppen in Komponente (II) zu einem numerischen Anteil bevorzugt von 0 bis 20%, mehr bevorzugt größer 0 bis 15, mehr bevorzugt nicht enthalten sind.

Mehr bevorzugt weist die erfindungsgemäße Zusammensetzung in Komponente (II) keine nicht radikalisch polymerisierbaren Estergruppen auf und in Komponente (III) zu einem numerischen Anteil von5 bis 15 % bezogen auf die Anzahl aller Esterfunktionen in Komponente (III) nicht radikalisch polymerisierbaren Estergruppen auf.

Mehr bevorzugt weist die erfindungsgemäße Zusammensetzung die Komponente (III) in einem Prozentsatz von 0 bis 70 Gew.-% auf, wobei sie 4 bis 40 Siliziumatome aufweist wobei 15 bis 100% der Siliziumatome ethylenisch ungesättigte, radikalisch polymerisierbaren Gruppen, bevorzugt Acryl- und/oder Methacrylsäure Esterfunktionen aufweisen.

Besonders bevorzugt weist die erfindungsgemäße Zusammensetzung die Komponente (III) in einem Prozentsatz von 0 bis 70 Gew.-% auf, wobei sie 4 bis 40 Siliziumatome aufweist wobei 15 bis 100% der Siliziumatome ethylenisch ungesättigte, radikalisch polymerisierbaren Gruppen, bevorzugt Acryl- und/oder Methacrylsäure Esterfunktionen aufweisen, die neben den ethylenisch ungesättigten, radikalisch polymerisierbaren Gruppen auch noch nicht polymerisierbare Estergruppen zu einem numerischen Anteil von 3 bis 20 % bezogen auf die Anzahl aller Esterfunktionen enthalten sind.

Bevorzugt weist die erfindungsgemäße Zusammensetzung die Komponente (III) in einem Prozentsatz von 10 bis 40 % auf, wobei sie 10 bis 30 Siliziumatome aufweist wobei 20 bis 50% der Siliziumatome ethylenisch ungesättigte, radikalisch polymerisierbaren Gruppen, bevorzugt Acryl-Esterfunktionen aufweisen, die neben den ethylenisch ungesättigten, radikalisch polymerisierbaren Gruppen auch noch nicht polymerisierbare Estergruppen zu einem numerischen Anteil von 5 bis 15 % bezogen auf die Anzahl aller Esterfunktionen enthalten sind.

Die Angabe, dass ein bestimmter Prozentsatz der Siliziumatome der Komponenten (II) und/oder (III) in bestimmter Weise substituiert sind, bezieht sich auf den molaren Anteil aller Siliziumatome im numerischen statistischen Mittel aller Moleküle in der jeweiligen Komponente.

Ein Vorteil der erfindungsgemäßen Zusammensetzungen ist, dass diese in der Lage sind zu sehr glatten Untergründen, auf denen eine physikalische Verankerung durch Einfließen in raue Oberflächen nicht möglich ist, trotzdem eine gute Haftung zu erzielen.

Weiterhin bevorzugt sind die Komponenten (II) eine oder mehrere Verbindungen der Formel (I),

M¹ₐM²_{b}D¹_{c}D²_{d} (I)

mit
- M¹: = [R¹₃SiO_{1/2}],
- M²: = [R¹₂R²SiO_{1/2}],
- D¹: = [R¹₂SiO_{2/2}],
- D²: = [R¹R²SiO_{2/2}],
- a: = 0 bis 2,
- b: = 0 bis 2, wobei a + b = 2,
- c: = 50 bis 490, bevorzugt 60 bis 290, mehr bevorzugt 70 bis 190, insbesondere bevorzugt 80 bis 170,
- d: = 0 bis 15, bevorzugt 0 bis 10,
wobei das Verhältnis der Summe (b + d) zur Summe (c + d + 2) von 0,004 bis zu 0,1 ist, bevorzugt 0,006 bis 0,8, und mehr bevorzugt 0,008 bis 0,7;
wobei die Summe (c + d + 2) gleich 50 bis 500, bevorzugt 60 bis 300, mehr bevorzugt 70 bis 200, insbesondere bevorzugt 80 bis 180 beträgt,
- R¹: gleiche oder verschiedene aliphatische Kohlenwasserstoffe mit 1 bis 10 Kohlenstoffatomen oder aromatische Kohlenwasserstoffe mit 6 bis 12 Kohlenstoffatomen, bevorzugt Methyl- und/oder Phenylgruppen, insbesondere bevorzugt Methylgruppen,
- R²: gleiche oder verschiedene Kohlenwasserstoffe, welche 1 bis 5 gleiche oder verschiedene Esterfunktionen aufweisen, wobei der Kohlenwasserstoff linear, cyclisch, verzweigt und/oder aromatisch, bevorzugt linear oder verzweigt ist, wobei die Esterfunktionen ausgewählt sind aus ethylenisch ungesättigten, radikalisch polymerisierbaren Esterfunktionen und nicht radikalisch polymerisierbaren Estergruppen.

Bevorzugt weisen die Reste R² in Verbindungen der Formel (I) als ethylenisch ungesättigte, radikalisch polymerisierbare Esterfunktionen solche ausgewählt aus Acryl- und/oder Methacrylsäure Esterfunktionen, besonders bevorzugt Acrylsäure Esterfunktionen auf.

Bevorzugt weisen die Reste R² in Verbindungen der Formel (I) als nicht radikalisch polymerisierbare Estergruppen Monocarbonsäurereste auf. Bevorzugt sind die nicht radikalisch polymerisierbaren Estergruppen ausgewählt aus den Säureresten der Säuren Essigsäure, Propionsäure, Buttersäure, Valeriansäure und Benzoesäure, besonders bevorzugt Essigsäure. Mehr bevorzugt sind die Monocarbonsäurereste zu einem numerischen Anteil von 0 bis 20 %, bevorzugt größer 0 bis 15 % bezogen auf die Anzahl aller Esterfunktionen der Verbindungen der Formel (II) enthalten.

Bevorzugt weisen die Reste R² in Verbindungen der Formel (I) keine Estergruppen auf, die nicht radikalisch polymerisierbar sind.

Weiterhin bevorzugt sind die Komponenten (III) eine oder mehrere Verbindungen der Formel (II),

M¹ₑM³_{f}D¹_{g}D³ₕ (II)

mit
- M¹: = [R¹₃SiO_{1/2}],
- M³: = [R¹₂R³SiO_{1/2}],
- D¹: = [R¹₂SiO_{2/2}],
- D³: = [R¹R³SiO_{2/2}],
- e: = 0 bis 2,
- f: = 0 bis 2, bevorzugt null, wobei e + f = 2,
- g: = 0 bis 38, bevorzugt 10 bis 26,
- h: = 0 bis 20, bevorzugt 4 bis 15,
wobei das Verhältnis der Summe (f + h) zur Summe (g + h + 2) von 0,15 bis zu 1 ist, bevorzugt 0,2 bis 0,5 ist,
wobei die Summe (g + h + 2) gleich 4 bis 40, bevorzugt 10 bis 30 beträgt,
wobei die Reste R¹ wie für Formel (I) angegeben definiert sind,
- R³: gleiche oder verschiedene Kohlenwasserstoffe, welche 1 bis 5 gleiche oder verschiedene Esterfunktionen aufweisen, wobei der Kohlenwasserstoff linear, cyclisch, verzweigt und/oder aromatisch, bevorzugt linear oder verzweigt ist, wobei die Esterfunktionen ausgewählt sind aus ethylenisch ungesättigten, radikalisch polymerisierbaren Esterfunktionen und nicht radikalisch polymerisierbaren Estergruppen.

Bevorzugt weisen die Reste R³ in Verbindungen der Formel (II) als ethylenisch ungesättigte, radikalisch polymerisierbare Esterfunktionen solche ausgewählt aus Acryl- und/oder Methacrylsäure Esterfunktionen, besonders bevorzugt Acrylsäure Esterfunktionen auf.

Bevorzugt weisen die Reste R³ in Verbindungen der Formel (II) als nicht radikalisch polymerisierbare Estergruppen Monocarbonsäurereste auf. Bevorzugt sind die nicht radikalisch polymerisierbaren Estergruppen ausgewählt aus den Säureresten der Säuren Essigsäure, Propionsäure, Buttersäure, Valeriansäure und Benzoesäure, besonders bevorzugt Essigsäure. Mehr bevorzugt sind die Monocarbonsäurereste zu einem numerischen Anteil von 3 bis 20 %, bevorzugt 5 bis 15 % bezogen auf die Anzahl aller Esterfunktionen der Verbindungen der Formel (II) enthalten.

Besonders bevorzugt weist die erfindungsgemäße Zusammensetzung die Komponente (III) notwendigerweise auf.

Ein weiterer Gegenstand der vorliegenden Erfindung ist die Verwendung der erfindungsgemäßen Zusammensetzungen als strahlenhärtende Beschichtungsmassen.

Bevorzugt ist die Verwendung der Zusammensetzungen in strahlenhärtenden Beschichtungsmassen eine Trennbeschichtung ist. Eine Trennbeschichtung ist bevorzugterweise eine abhäsive Beschichtung.

Ein weiterer Gegenstand der vorliegenden Erfindung sind strahlenhärtende Beschichtungsmassen enthaltend die erfindungsgemäßen Zusammensetzungen und gegebenenfalls weitere Zusätze.

Bevorzugt sind die Zusätze ausgewählt aus Photoinitiatoren, Photosensibilisatoren, Füllstoffen, Pigmenten, Lösemittel, phosphorhaltige Verbindungen welche unter UV Licht polymerisieren, Stabilisatoren z.B. Phosphite oder hindered amine light stabilizers (HALS), Anti Misting Additive und Am in-Synergisten.

Die erfindungsgemäßen strahlenhärtenden Beschichtungsmassen können dreidimensional durch freie Radikale vernetzt werden. Unter Einfluss energiereicher Strahlung, wie UV- oder Elektronenstrahlung, innerhalb kürzester Zeit zu mechanisch und chemisch widerstandsfähigen Schichten aus, die bei geeigneter Zusammensetzung der erfindungsgemäßen Beschichtungsmassen vorbestimmbare abhäsive Eigenschaften wie auch Haftungseigenschaften aufweisen.

Wird als Strahlungsquelle UV-Licht verwendet, erfolgt die Vernetzung/Härtung vorzugsweise in Anwesenheit von Photoinitiatoren und/oder Photosensibilisatoren.

Bevorzugt sind Photoinitiatoren vom Norrish Typ 1, z.B. Benzoinderivate, alpha-Hydroxyalkylphenone und Derviate sowie Acylphosphineoxid und Derivate.

Bevorzugte erfindungsgemäße strahlenhärtende Beschichtungsmassen weisen Photoinitiatoren und/oder Photosensibilisatoren in Mengen von 0,01 bis 10 Gew.-%, insbesondere von 0,1 bis 5 Gew.-% auf, bezogen auf die gesamte Beschichtungsmasse.

Die Photoinitiatoren und/oder Photosensibilisatoren sind bevorzugt in den erfindungsgemäßen Zusammensetzungen löslich, mehr bevorzugt löslich im Bereich von 0,01 bis 10 Gew.-%, insbesondere von 0,1 bis 5 Gew.-% bezogen auf die gesamte Beschichtungsmasse.

Geeignete UV Strahlenquellen zur Aushärtung der erfindungsgemäßen Beschichtungsmassen sind Mitteldruckquecksilberdampflampen, gegebenenfalls dotiert oder Niederdruckquecksilberdampflampen, UV-LED-Lampen oder sogenannte Excimerstrahler. Die UV-Strahler können polychromatisch oder monochromatisch sein. Bevorzugt liegt der Emmisionsbereich des Strahlers im Absorptionsbereich der Photoinitiatoren und/oder Photosensibilisatoren.

Die erfindungsgemäßen Beschichtungsmassen weisen eine sehr gute Haftung und gleichzeitig sehr guter Trennwirkung auf.

Trennbeschichtungen sind im Stand der Technik bekannt, bevorzugt abhäsive Beschichtungen auf flächigen Trägern, für die Anwendung in Klebebändern oder Etikettenlaminaten.

Die Überprüfung der Haftung der gehärteten Beschichtung zum Trägermaterial erfolgt durch kräftiges Reiben mit dem Daumen auf der Beschichtung. Bei mangelnder Haftung bilden sich gummiartige Krümel. Solche Krümel sollen auch bei intensivem Reiben nicht entstehen. Dieser Test wird allgemein als "Rub-off"-Test bezeichnet und entspricht einer Mischung aus Kratzfestigkeit der Beschichtung (Kohäsion) und Haftung der Beschichtung zum Untergrund (Adhäsion). Er wird von einem ausgebildeten Panel durchgeführt.

Die Trennwirkung gegen klebende Substanzen, in der technischen Anwendung zumeist Klebebänder oder Etiketten, wird durch den Trennwert ausgedrückt, wobei ein niedriger Trennwert eine gute Trennwirkung beschreibt. Der Trennwert hängt von der Qualität der Trennbeschichtung, vom Klebstoff und von den Testbedingungen ab. Zur Bewertung von Trennbeschichtungen sollen deshalb gleiche Klebstoffe und Testbedingungen vorliegen. Für die Ermittlung der Trennwerte werden Klebebänder oder Etikettenlaminate auf 2,5 cm breite geschnitten und die Klebeseite auf der zu testenden Siliconbeschichtung aufgebracht. Diese Prüfung wird gemäß FINAT Handbook 8th Edition, The Hague/ NI, 2009 unter der Bezeichnung FTM 10 durchgeführt, mit der Änderung dass die Lagerung unter Druck bei 40°C durchgeführt wird. Zur Überprüfung der Stabilität des Trennwertes wird die Prozedur mit verlängerter Lagerzeit von drei Monaten wiederholt.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt gelesen werden kann.

### Beispiele: Komponenten

### Komponente I:

### Nicht Erfindungsgemäß:

NE-I-1: Trimethylolpropantriacrylat, SR 351, Sartomer, Frankreich
NE-I-2: Pentaerythritoltriacrylat, Miramer M340, Rahn AG, Deutschland
NE-I-3: Hexandioldiacrylat, Miramer M200, Rahn AG, Deutschland
NE-I-4: Tripropylenglycol diacrylate, Miramer M220, Rahn AG, Deutschland

### Erfindungsgemäß:

E-I-1: Ethoxyliertes (nach Produktbeschreibung 3 Ethylenoxid Einheiten in Summe) trimethylolpropantriacrylat, Miramer 3130, Rahn AG, Deutschland
E-I-2: Ethoxyliertes (nach Produktbeschreibung 20 Ethylenoxid Einheiten in Summe) trimethylolpropantriacrylat, SR 415, Sartomer, Frankreich
E-I-3: Polyethylenglykol 600 diacrylat (nach Produktbeschreibung Mw 700 g/mol; entspricht Glykol mit 12 Ethylenoxid Einheiten), Ebecryl® 11, Allnex, Ebecryl ist ein Warenzeichen der Cytec Surface Specialties S.A. Anderlecht, Belgien
E-I-4: Ethoxyliertes und propoxyliertes (nach¹H-NMR 1,2 Propylenoxid und 5 Ethylenoxid Einheiten in Summe) Pentaerythitoltetraacrylat, Ebecryl® 40, Allnex, Ebecryl ist ein Warenzeichen der Cytec Surface Specialties S.A. Anderlecht, Belgien

### Komponente II:

E-II-1: Ein ausschließlich endständig modifiziertes Silicon mit N=50, wobei N die Anzahl der Siliziumatome im Molekül bedeutet. Hergestellt nach in der US6211322 beschriebenem Verfahren über ein entsprechendes Wasserstoffsiloxan durch Hydrosilylierung mit Trimethylolpropanmonoallylether und anschließender Veresterung mit Acrylsäure, so dass 4 Acrylatgruppen pro Molekül vorhanden sind, entsprechend sind 4% der Siliziumatome acryliert.

E-II-2: Ein ausschließlich endständig modifiziertes Silicon mit N=100. Hergestellt wie E-II-1, entsprechend sind 2% der Siliziumatome acryliert.

E-II-3: Ein ausschließlich endständig modifiziertes Silicon mit N=200. Hergestellt wie E-II-1, entsprechend sind 1% der Siliziumatome acryliert.

E-II-4: Ein ausschließlich endständig modifiziertes Silicon mit N=300. Hergestellt wie E-II-1, entsprechend sind 0,67% der Siliziumatome acryliert.

E-II-5: Ein ausschließlich endständig modifiziertes Silicon mit N=100. Hergestellt nach in der US6211322 beschriebenem Verfahren über ein entsprechendes Wasserstoffsiloxan durch Hydrosilylierung mit 5-Hexen-1-ol und anschließender Veresterung mit Acrylsäure, so dass 2 Acrylatgruppen pro Molekül vorhanden sind, entsprechend sind 2% der Siliziumatome acryliert.

S-II-1: Ein ausschließlich seitenständig modifiziertes Silicon mit N=100. Hergestellt nach in der US4978726 beschriebenem Verfahren über ein Wasserstoffsiloxan mit 6 seitenständigen SiH Gruppen durch Hydrosilylierung mit Allylglycidether und anschließender Ringöffnung mit Acrylsäure, so dass 6 Acrylatgruppen pro Molekül vorhanden sind, entsprechend sind 6% der Siliziumatome acryliert.

S-II-2: Ein end- und seitenständig modifiziertes Silicon mit N=150. Hergestellt nach in der US6211322 beschriebenem Verfahren über ein Wasserstoffsiloxan mit 6 seitenständigen und 2 endständigen SiH Gruppen durch Hydrosilylierung mit 5-Hexen-1ol und anschließender Veresterung mit Acrylsäure, so dass 8 Acrylatgruppen pro Molekül vorhanden sind, entsprechend sind 5,3% der Siliziumatome acryliert.

### Komponente III:

S-III-1: Ein ausschließlich seitenständig modifiziertes Silicon mit N=40. Hergestellt nach in der US4978726 beschriebenem Verfahren über ein Wasserstoffsiloxan mit 6 seitenständigen SiH Gruppen durch Hydrosilylierung mit Allylglycidether und anschließender Ringöffnung mit Acrylsäure, so dass 6 Acrylatgruppen pro Molekül vorhanden sind, entsprechend sind 15% der Siliziumatome acryliert.

S-III-2: Ein ausschließlich seitenständig modifiziertes Silicon mit N=10. Hergestellt nach in der US4978726 beschriebenem Verfahren über ein Wasserstoffsiloxan mit 5 seitenständigen SiH Gruppen durch Hydrosilylierung mit Allylglycidether und anschließender Ringöffnung mit Acrylsäure, so dass 5 Acrylatgruppen pro Molekül vorhanden sind, entsprechend sind 50% der Siliziumatome acryliert.

S-III-3: Ein ausschließlich seitenständig modifiziertes Silicon mit N=20. Hergestellt nach in der US4978726 beschriebenem Verfahren über ein Wasserstoffsiloxan mit 6 seitenständigen SiH Gruppen durch Hydrosilylierung mit Allylglycidether und anschließender Ringöffnung mit einem Gemisch aus 15% Essigsäure und 85% Acrylsäure, so dass 5,1 Acrylatgruppen pro Molekül vorhanden sind, entsprechend sind 25,5% der Siliziumatome acryliert.

### Beispiele: Zusammensetzungen

**Tabelle 1: Erfindungsgemäße Zusammensetzungen, Gehaltsangaben in Gew.-% bezogen auf die Summe der angeführten Komponenten**

| Beispiel | Komponente I | | Komponente II | | Komponente III | |
|---|---|---|---|---|---|---|
| | Gehalt [Gew.-%] | | Gehalt [Gew.-%] | | Gehalt [Gew.-%] | |
| E-A | E-I-1 | 10 | E-II-2 | 70 | S-III-3 | 20 |
| E-B | E-I-2 | 10 | E-II-2 | 70 | S-III-3 | 20 |
| E-C | E-I-3 | 10 | E-II-2 | 70 | S-III-3 | 20 |
| E-D | E-I-4 | 10 | E-II-2 | 70 | S-III-3 | 20 |
| E-E | E-I-1 | 10 | E-II-1 | 70 | S-III-3 | 20 |
| E-F | E-I-1 | 10 | E-II-3 | 70 | S-III-3 | 20 |
| E-G | E-I-1 | 10 | E-II-4 | 70 | S-III-3 | 20 |
| E-H | E-I-1 | 10 | E-II-5 | 70 | S-III-3 | 20 |
| E-I | E-I-1 | 10 | S-II-1 | 70 | S-III-3 | 20 |
| E-J | E-I-1 | 10 | S-II-2 | 70 | S-III-3 | 20 |
| E-K | E-I-1 | 10 | E-II-2 | 70 | S-III-1 | 20 |
| E-L | E-I-1 | 10 | E-II-2 | 70 | S-III-2 | 20 |
| E-M | E-I-1 | 5 | E-II-2 | 95 | - | - |
| E-N | E-I-1 | 30 | E-II-2 | 70 | - | - |
| E-O | E-I-1 | 80 | E-II-2 | 20 | - | - |
| E-P | E-I-1 | 2 | E-II-2 | 60 | S-III-3 | 38 |

**Tabelle 2: Nicht erfindungsgemäße Zusammensetzungen, Gehaltsangaben in Gew.-% bezogen auf die Summe der angeführten Komponenten**

| Beispiel | Komponente I | | Komponente II | | Komponente III | |
|---|---|---|---|---|---|---|
| | Gehalt [Gew.-%] | | Gehalt [Gew.-%] | | Gehalt [Gew.-%] | |
| N-A | NE-I-1 | 10 | E-II-2 | 70 | S-III-3 | 20 |
| N-B | NE-I-2 | 10 | E-II-2 | 70 | S-III-3 | 20 |
| N-C | NE-I-3 | 10 | E-II-2 | 70 | S-III-3 | 20 |
| N-D | NE-I-4 | 10 | E-II-2 | 70 | S-III-3 | 20 |
| N-E | NE-I-1 | 10 | E-II-1 | 70 | S-III-3 | 20 |
| N-F | NE-I-1 | 10 | E-II-3 | 70 | S-III-3 | 20 |
| N-G | NE-I-1 | 10 | E-II-4 | 70 | S-III-3 | 20 |
| N-H | NE-I-1 | 10 | E-II-5 | 70 | S-III-3 | 20 |
| N-I | NE-I-1 | 10 | S-II-1 | 70 | S-III-3 | 20 |
| N-J | NE-I-1 | 10 | S-II-2 | 70 | S-III-3 | 20 |
| N-K | NE-I-1 | 10 | E-II-2 | 70 | S-III-1 | 20 |
| N-L | NE-I-1 | 10 | E-II-2 | 70 | S-III-2 | 20 |
| N-M | NE-I-1 | 5 | E-II-2 | 95 | - | - |
| N-N | NE-I-1 | 30 | E-II-2 | 70 | - | - |
| N-O | NE-I-1 | 80 | E-II-2 | 20 | - | - |
| N-P | NE-I-1 | 2 | E-II-2 | 60 | S-III-3 | 38 |
| N-Q | - | - | E-II-1 | 70 | S-III-3 | 30 |
| N-R | - | - | E-II-2 | 70 | S-III-3 | 30 |
| N-S | - | - | E-II-3 | 70 | S-III-3 | 30 |
| N-T | - | - | E-II-4 | 70 | S-III-3 | 30 |
| N-U | - | - | E-II-5 | 70 | S-III-3 | 30 |
| N-V | - | - | S-II-1 | 70 | S-III-3 | 30 |
| N-W | - | - | S-II-2 | 70 | S-III-3 | 30 |
| N-X | - | - | E-II-2 | 70 | S-III-1 | 30 |
| N-Y | - | - | E-II-2 | 70 | S-III-2 | 30 |
| N-Z1 | NE-I-1 | 30 | | | S-III-3 | 70 |
| N-Z2 | E-I-2 | 30 | | | S-III-3 | 70 |

### Beispiele: Anwendungstechnische Überprüfung

Zur Herstellung von strahlenhärtenden Beschichtungsmassen wurden je 100g Zusammensetzungen nach Tabelle 1 und Tabelle 2 mit 2% Photoinitiator TEGO® A18 der Evonik Industries AG vermengt. Die Beschichtungsmassen wurden durch Verrühren von Hand mit einem Spatel solange gerührt bis keine Inhomogenität mehr sichtbar war. Die Beschichtungsmassen wurden auf einen flächigen Träger aufgebracht. Dieser war in allen Beispielen eine 50cm breite BOPP (orientierte Polypropylen) Folie welche zuvor mit einer Generatorleistung von 1 kW einer Coronavorbehandlung unterzogen wurde. Die Beschichtungsmassen wurde mittels eines 5-Walzenbeschichtungswerkes der Firma COATEMA® Coating Machinery GmbH, Dormagen, Deutschland mit einem Flächengewicht von ca. 1 g/m² aufgetragen und durch Einwirkung von UV-Licht einer Mitteldruckquecksilberdampflampe der Firma IST® Metz GmbH, Nürtingen Deutschland mit 60 W/cm bei einer Bahngeschwindigkeit von 100 m/min unter Stickstoffatmosphäre mit einem Restsauerstoffgehalt unter 50 ppm gehärtet.

Die beschichteten Proben wurden einer Prüfung auf Rub-off, Trennwert und Trennwertstabilität (Zeitabhängigkeit der Trennwerte) unterzogen.

Rub-off: Die Überprüfung der Haftung der gehärteten Beschichtung zum Trägermaterial erfolgt durch kräftiges Reiben mit dem Daumen auf der Beschichtung. Bei mangelnder Haftung bilden sich gummiartige Krümel. Solche Krümel sollen auch bei intensivem Reiben nicht entstehen. Die Prüfung wird von einem ausgebildeten Panel durchgeführt. Die Auswertung wird kategorisiert in Schulnoten von 1 bis 3, wobei 3 ungenügend entspricht.

Note 1= Sehr gute Kratzfestigkeit und Verankerung zum Substrat. Mit linearer und anschließender kreisförmiger Bewegung auf der gleichen Stelle sind keine Krümel feststellbar.

Note 2= Hinreichende Kratzfestigkeit und Haftung zum Substrat. Mit linearer Bewegung werden keine Krümel erzeugt, jedoch mit anschließender kreisförmiger Bewegung auf gleicher Stelle entstehen Krümel.

Note 3= Unzureichende Kratzfestigkeit und Haftung. Bereits mit linearer Bewegung werden Krümel erzeugt.

Trennwerte: Die Trennwerte werden gemäß Testvorschrift aus FINAT Handbook 8th Edition, The Hague/ NI, 2009 unter der Bezeichnung FTM 10 durchgeführt, mit der Änderung dass die Lagerung unter Druck bei 40°C durchgeführt wird. Verwendet wurde das Klebeband TESA®7476, Warenzeichen der Firma tesa SE, Deutschland, Hamburg sowie ein auf 2.5cm Breite geschnittenes Etikettenlaminat beschichtet mit dem Heissschmelzklebstoff Technomelt PS 9129A der Firma Henkel Corporation/ USA auf einem weißem Papierdruckträger. Zum Test wird das Laminat getrennt und Technomelt PS 9129A auf Druckträgerpapier als Testkleber verwendet.

Die Ergebnisse der Rub-off Tests, der Trennwerte sowie der Trennwertstabilitäten sind in Tabellen 3a (erfindungsgemäße Beispiele) und 3b (nicht erfindungsgemäße Beispiele) dargestellt: Rub-off (Note 1 bis 3); Trennwerte (TW) mit zwei Klebstoffen in cN/2,5 cm nach 24 Stunden 40°C Lagerung, Trennwertstabilität für Klebstoff PS 9129A in cN/2,5 cm nach 3 Monaten 40°C Lagerung.

**Tabelle 3a: Ergebnisse des Beispiels 3, erfindungsgemäße Beschichtungsmassen nach Beispiel 1.**

| Beispiel | Rub-off | TW (PS 9129A) 24 h [cN/2,5 cm] | TW (PS 9129A) 3 Monate [cN/2,5 cm] | TW (TESA 7476) 24 h [cN/2,5 cm] |
|---|---|---|---|---|
| E-A | 1 | 11 | 14 | 36 |
| E-B | 1 | 10 | 11 | 34 |
| E-C | 1 | 10 | 12 | 35 |
| E-D | 1 | 11 | 13 | 36 |
| E-E | 1 | 23 | 25 | 71 |
| E-F | 1 | 7 | 8 | 29 |
| E-G | 2 | 4 | 4 | 30 |
| E-H | 1 | 4 | 6 | 31 |
| E-I | 1 | 17 | 19 | 49 |
| E-J | 1 | 16 | 16 | 40 |
| E-K | 1 | 10 | 11 | 32 |
| E-L | 1 | 13 | 13 | 41 |
| E-M | 1 | 8 | 9 | 34 |
| E-N | 1 | 12 | 15 | 42 |
| E-O | 1 | 16 | 23 | 48 |
| E-P | 1 | 10 | 11 | 36 |

Die Trennwerte der erfindungsgemäßen Beispiele E-A, E-E bis E-L (Tabelle 3a) sind vergleichbar den nicht erfindungsgemäßen Vergleichsbeispielen N-Q bis N-Y (Tabelle 3b). Bei Vergleich der Werte des Rub-offs zeigt sich der Nachteil der Abwesenheit der Komponente I in den nicht erfindungsgemäßen Beispielen N-Q bis N-Y, die Werte der erfindungsgemäßen Beispiele E-A, E-E bis E-L weisen einen verbesserten, niedrigeren Rub-off auf.

Ebenfalls verglichen werden kann das nicht erfindungsgemäße Beispiel N-R mit den erfindungsgemäßen Beispielen E-A bis E-D. Die Trennwerte sind vergleichbar, der Rub-off der erfindungsgemäßen Zusammensetzungen ist verbessert. Auch in den nicht erfindungsgemäßen Beispielen N-A bis N-D ist der Rub-off gegenüber dem Wert für N-R verbessert, jedoch sind die Trennwerte erhöht. Hervorzuheben ist hierbei die besonders verschlechterte Trennwertstabilität der nicht erfindungsgemäßen Beispiele N-A bis N-D gegenüber den erfindungsgemäßen E-A bis E-D.

Auch ein geringer Anteil der erfindungsgemäßen Komponente I kann dabei bereits eine Verbesserung des Rub-off bewirken, wie Beispiel E-P zeigt. Im Vergleich zur nicht erfindungsgemäßen Komponenten wird wieder ein besserer Trennwert beobachtet, Beispiel N-P.

Weiterhin ersichtlich aus den Tabellen 3a und 3b ist, dass auch Mischungen ohne Komponente III einen guten Rub-off erreichen können. Erfindungsgemäße Beispiele E-M bis E-O erreichen dabei wieder einen niedrigeren Trennwert als nicht die erfindungsgemäßen Mischungen N-M bis N-O.

**Tabelle 3b: Ergebnisse des Beispiels 3, nicht erfindungsgemäße Beschichtungsmassen nach Beispiel 1.**

| Beispiel | Rub-off | TW (PS 9129A) 24 h [cN/2,5 cm] | TW (PS 9129A) 3 Monate [cN/2,5 cm] | TW (TESA 7476) 24 h [cN/2,5 cm] |
|---|---|---|---|---|
| N-A | 1 | 16 | 28 | 51 |
| N-B | 1 | 17 | 29 | 48 |
| N-C | 1 | 18 | 32 | 46 |
| N-D | 1 | 18 | 35 | 46 |
| N-E | 1 | 31 | 48 | 86 |
| N-F | 1 | 15 | 29 | 42 |
| N-G | 2 | 12 | 26 | 38 |
| N-H | 1 | 11 | 23 | 40 |
| N-I | 1 | 25 | 38 | 55 |
| N-J | 1 | 21 | 36 | 48 |
| N-K | 1 | 15 | 28 | 41 |
| N-L | 1 | 17 | 35 | 52 |
| N-M | 1 | 14 | 27 | 43 |
| N-N | 1 | 19 | 39 | 56 |
| N-O | 1 | 29 | 56 | 76 |
| N-P | 1 | 15 | 31 | 46 |
| N-Q | 2 | 22 | 26 | 72 |
| N-R | 2 | 10 | 13 | 35 |
| N-S | 3 | 6 | 8 | 30 |
| N-T | 3 | 4 | 5 | 28 |
| N-U | 3 | 6 | 6 | 33 |
| N-V | 2 | 18 | 20 | 48 |
| N-W | 3 | 15 | 16 | 38 |
| N-X | 3 | 9 | 11 | 33 |
| N-Y | 2 | 12 | 13 | 40 |
| N-Z1 | 1 | 159 | 296 | 563 |
| N-Z2 | 1 | 162 | 312 | 620 |

Aus Tabelle 3b ist ersichtlich, dass nicht erfindungsgemäße Zusammensetzungen bestehend nur aus Komponenten II und III, entsprechend Beispielen N-Q bis N-Y, keine sehr gute Haftung zum Substrat, ausgedrückt über Rub-off (alle Werte über 1), aufweisen. Einige der Vergleichsbeispiele erreichen eine hinreichende Haftung, insbesondere jene Mischungen mit eher höherem Trennwert. Mischungen mit besonders niedrigen Trennwerten (N-S bis N-U sowie N-X) weisen nur unzureichende Haftung auf.

Dies zeigt, dass mit Mischungen bestehend nur aus Komponente II und III keine Beschichtung mit gleichzeitig guter Haftung und niedrigem Trennwert erhalten werden kann.

Weiterhin ist ersichtlich, dass die Verwendung von ausschließlich Komponente I und Komponente III, entsprechend Beispielen N-Z1 und N-Z2 nicht zu Beschichtungen mit niedrigen Trennwerten führt. Es ist in diesem Falle unerheblich, ob die Komponente III mit erfindungsgemäßer Komponente I oder nicht erfindungsgemäßer Komponente I gemischt wird. Mischungen ohne Komponente II sind deshalb nicht zielführend und nicht erfindungsgemäß. Vielmehr muss die Komponente II zugegeben werden um die geforderten niedrigen Trennwerte zu erreichen.

Weiterhin ist ersichtlich, dass durch die Zugabe von nicht erfindungsgemäßen Komponenten I (N-A bis N-P) zwar der Rub-off verbessert werden kann, jedoch der Trennwerte erhöht wird. Dazu sollten die Werte N-A, N-E bis N-L mit den Werten N-Q bis N-Y verglichen werden.

Durch die Anwendung der erfindungsgemäßen Zusammensetzungen gelingt es also gleichzeitig einen guten Rub-off, einen niedrigen Trennwert sowie eine gute Trennwertstabilität zu erhalten.

## Patentansprüche

1. Zusammensetzungen enthaltend die Komponenten (I), (II) und optional (III)
(I) 1 bis 90 Gew.-% bezogen auf die Summe aller Komponenten der Zusammensetzung eines oder mehrerer Kohlenwasserstoffe, bestehend aus den Elementen Kohlenstoff, Wasserstoff und Sauerstoff, der 2 bis 6 ethylenisch ungesättigte, radikalisch polymerisierbare Gruppen und mindestens eine Oxyethylengruppe aufweist,
(II) 10 bis 99 Gew.-% bezogen auf die Summe aller Komponenten der Zusammensetzung eines oder mehrerer organomodifizierter Silicone mit 50 bis 500, bevorzugt 60 bis 300, mehr bevorzugt 70 bis 200, insbesondere bevorzugt 80 bis 180 Siliziumatomen, wobei 0,4 bis 10%, bevorzugt 0,6 bis 8%, mehr bevorzugt 0,8 bis 7 % der Siliziumatome ethylenisch ungesättigte, radikalisch polymerisierbaren Gruppen, wobei ein Siliziumatom ein, zwei oder drei solcher Gruppen tragen kann,
(III) 0 bis 70 Gew.-% bezogen auf die Summe aller Komponenten der Zusammensetzung eines oder mehrerer organomodifizierter Silicone mit 4 bis 40, bevorzugt 10 bis 30 Siliziumatomen, wobei 15 bis 100%, bevorzugt 20 bis 50% der Siliziumatome ethylenisch ungesättigte, radikalisch polymerisierbare Gruppen, bevorzugt Acryl- und/oder Methacrylsäure Esterfunktionen aufweisen,
wobei Komponente (I) bevorzugt frei von Siliziumatomen ist.

2. Zusammensetzungen gemäß Anspruch 1 **dadurch gekennzeichnet, dass** die Komponenten (II) als ethylenisch ungesättigte, radikalisch polymerisierbaren Gruppen Acryl- und/oder Methacrylsäure Esterfunktionen aufweisen.

3. Zusammensetzungen gemäß Anspruch 1 **dadurch gekennzeichnet, dass** die Komponenten (III) neben den ethylenisch ungesättigten, radikalisch polymerisierbaren Gruppen auch noch nicht radikalisch polymerisierbare Estergruppen enthält.

4. Zusammensetzungen gemäß Anspruch 2 **dadurch gekennzeichnet, dass** die Komponenten (II) keine Estergruppen aufweist, die nicht radikalisch polymerisierbar sind.

5. Zusammensetzungen gemäß Anspruch 1 **dadurch gekennzeichnet, dass** die Komponenten (II) eine oder mehrere Verbindungen der Formel (I) ist,
M¹ₐM²_{b}D¹_{c}D²_{d} (I)
mit
M¹ = [R¹₃SiO_{1/2}],
M² = [R¹₂R²SiO_{1/2}],
D¹ = [R¹₂SiO_{2/2}],
D² = [R¹R²SiO_{2/2}],
a = 0 bis 2,
b = 0 bis 2, wobei a + b = 2,
c = 50 bis 490, bevorzugt 60 bis 290, mehr bevorzugt 70 bis 190, insbesondere bevorzugt 80 bis 170,
d = 0 bis 15, bevorzugt 0 bis 10,
wobei das Verhältnis der Summe (b + d) zur Summe (c + d + 2) von 0,004 bis zu 0,1 ist, bevorzugt 0,006 bis 0,8, und mehr bevorzugt 0,008 bis 0,7;
wobei die Summe (c + d + 2) gleich 50 bis 500, bevorzugt 60 bis 300, mehr bevorzugt 70 bis 200, insbesondere bevorzugt 80 bis 180 beträgt,
R¹ gleiche oder verschiedene aliphatische Kohlenwasserstoffe mit 1 bis 10 Kohlenstoffatomen oder aromatische Kohlenwasserstoffe mit 6 bis 12 Kohlenstoffatomen, bevorzugt Methyl-und/oder Phenylgruppen, insbesondere bevorzugt Methylgruppen,
R² gleiche oder verschiedene Kohlenwasserstoffe, welche 1 bis 5 gleiche oder verschiedene Esterfunktionen aufweisen, wobei der Kohlenwasserstoff linear, cyclisch, verzweigt und/oder aromatisch, bevorzugt linear oder verzweigt ist, wobei die Esterfunktionen ausgewählt sind aus ethylenisch ungesättigten, radikalisch polymerisierbaren Esterfunktionen und nicht radikalisch polymerisierbaren Estergruppen.

6. Zusammensetzungen gemäß Anspruch 1 oder 2 **dadurch gekennzeichnet, dass** die Komponenten (III) eine Verbindung der Formel (II) ist,
M¹ₑM³_{f}D¹_{g}D³ₕ (II)
mit
M¹ = [R¹₃SiO_{1/2}],
M³ = [R¹₂R³SiO_{1/2}],
D¹ = [R¹₂SiO_{2/2}],
D³ = [R¹R³SiO_{2/2}],
e = 0 bis 2,
f = 0 bis 2, bevorzugt null, wobei e + f = 2,
g = 0 bis 38, bevorzugt 10 bis 26,
h = 0 bis 20, bevorzugt 4 bis 15,
wobei das Verhältnis der Summe (f + h) zur Summe (g + h + 2) von 0,15 bis zu 1 ist, bevorzugt 0,2 bis 0,5 ist,
wobei die Summe (g + h + 2) gleich 4 bis 40, bevorzugt 10 bis 30 beträgt,
wobei die Reste R¹ wie für Formel (I) angegeben definiert sind,
R³ gleiche oder verschiedene Kohlenwasserstoffe, welche 1 bis 5 gleiche oder verschiedene Esterfunktionen aufweisen, wobei der Kohlenwasserstoff linear, cyclisch, verzweigt und/oder aromatisch, bevorzugt linear oder verzweigt ist, wobei die Esterfunktionen ausgewählt sind aus ethylenisch ungesättigten, radikalisch polymerisierbaren Esterfunktionen und nicht radikalisch polymerisierbaren Estergruppen.

7. Zusammensetzungen gemäß mindestens einem der Ansprüche 1 bis 5, **dadurch gekennzeichnet, dass** die Komponente (III) notwendigerweise enthalten ist.

8. Verwendung der Zusammensetzungen gemäß mindestens einem der Ansprüche 1 bis 6 als strahlenhärtende Beschichtungsmassen.

9. Verwendung der Zusammensetzungen gemäß Anspruch 7 **dadurch gekennzeichnet, dass** die strahlenhärtende Beschichtungsmasse eine Trennbeschichtung ist.

10. Strahlenhärtende Beschichtungsmassen enthaltend Zusammensetzungen gemäß mindestens einem der Ansprüche 1 bis 6 und weitere Zusätze.

11. Strahlenhärtende Beschichtungsmassen gemäß Anspruch 9 **dadurch gekennzeichnet, dass** die Zusätze ausgewählt sind aus Photoinitiatoren, Photosensibilisatoren, Füllstoffen, Pigmenten, Lösemittel, phosphorhaltige Verbindungen welche unter UV Licht polymerisieren, Stabilisatoren z.B. Phosphite oder hindered amine light stabilizers (HALS), Anti Misting Additive und Amin-Synergisten.

## Claims

1. Compositions comprising components (I), (II) and optionally (III)
(I) 1 to 90 wt%, based on the sum of all components of the composition, of one or more hydrocarbons consisting of the elements carbon, hydrogen and oxygen and having 2 to 6 ethylenically unsaturated, radically polymerizable groups and at least one oxyethylene group,
(II) 10 to 99 wt%, based on the sum of all components of the composition, of one or more organomodified silicones having 50 to 500, preferably 60 to 300, more preferably 70 to 200, especially preferably 80 to 180 silicon atoms, it being possible for 0.4% to 10%, preferably 0.6% to 8%, more preferably 0.8 to 7% of the silicon atoms to carry ethylenically unsaturated, radically polymerizable groups, and it being possible for one silicon atom to carry one, two or three such groups,
(III) 0 to 70 wt%, based on the sum of all components of the composition, of one or more organomodified silicones having 4 to 40, preferably 10 to 30, silicon atoms, where 15% to 100%, preferably 20% to 50% of the silicon atoms have ethylenically unsaturated, radically polymerizable groups, preferably acrylic and/or methacrylic ester functions,
with component (I) being preferably free of silicon atoms.

2. Compositions according to Claim 1, **characterized in that** the components (II) have, as ethylenically unsaturated, radically polymerizable groups, acrylic and/or methacrylic ester functions.

3. Compositions according to Claim 1, **characterized in that** the components (III) comprise not only the ethylenically unsaturated, radically polymerizable groups but also ester groups which are as yet not radically polymerizable.

4. Compositions according to Claim 2, **characterized in that** the components (II) have no ester groups which are not radically polymerizable.

5. Compositions according to Claim 1, **characterized in that** the components (II) comprise one or more compounds of the formula (I),
M¹ₐM²_{b}D¹_{c}D²_{d} (I)
where
M¹ = [R¹₃SiO_{1/2}],
M² = [R¹₂R²SiO_{1/2}],
D¹ = [R¹₂SiO_{2/2}],
D² = [R¹R²SiO_{2/2}],
a = 0 to 2,
b = 0 to 2, and a + b = 2,
c = 50 to 490, preferably 60 to 290, more preferably 70 to 190, especially 80 to 170,
d = 0 to 15, preferably 0 to 10,
and the ratio of the sum (b + d) to the sum (c + d + 2) is from 0.004 up to 0.1, preferably 0.006 to 0.8, and more preferably 0.008 to 0.7;
and the sum (c + d + 2) is 50 to 500, preferably 60 to 300, more preferably 70 to 200, especially preferably 80 to 180,
R¹ denotes identical or different aliphatic hydrocarbons having 1 to 10 carbon atoms or aromatic hydrocarbons having 6 to 12 carbon atoms, preferably methyl and/or phenyl groups, especially preferably methyl groups,
R² denotes identical or different hydrocarbons which have 1 to 5 identical or different ester functions, the hydrocarbon being linear, cyclic, branched and/or aromatic, preferably linear or branched, and the ester functions being selected from ethylenically unsaturated, radically polymerizable ester functions and from ester groups which are not radically polymerizable.

6. Compositions according to Claim 1 or 2, **characterized in that** the components (III) comprise a compound of the formula (II)
M¹ₑM³_{f}D¹_{g}D³ₕ (II)
where
M¹ = [R¹₃SiO_{1/2}],
M³ = [R¹₂R³SiO_{1/2}],
D¹ = [R¹₂SiO_{2/2}],
D³ = [R¹R³SiO_{2/2}],
e = 0 to 2,
f = 0 to 2, preferably zero, and e + f = 2,
g = 0 to 38, preferably 10 to 26,
h = 0 to 20, preferably 4 to 15,
and the ratio of the sum (f + h) to the sum (g + h + 2) is from 0.15 up to 1, preferably 0.2 to 0.5,
and the sum (g + h + 2) is 4 to 40, preferably 10 to 30,
and the radicals R¹ are defined as specified for formula (I),
R³ denotes identical or different hydrocarbons which have 1 to 5 identical or different ester functions, the hydrocarbon being linear, cyclic, branched and/or aromatic, preferably linear or branched, and the ester functions being selected from ethylenically unsaturated, radically polymerizable ester functions and from ester groups which are not radically polymerizable.

7. Compositions according to at least one of Claims 1 to 5, **characterized in that** component (III) is necessarily included.

8. Use of the compositions according to at least one of Claims 1 to 6 as radiation-curing coating materials.

9. Use of the compositions according to Claim 7, **characterized in that** the radiation-curing coating material is a release coating.

10. Radiation-curing coating materials comprising compositions according to at least one of Claims 1 to 6 and further additives.

11. Radiation-curing coating materials according to Claim 9, **characterized in that** the additives are selected from photoinitiators, photosensitizers, fillers, pigments, solvents, phosphorus-containing compounds which polymerize under UV light, stabilizers, e.g. phosphites or hindered amine light stabilizers (HALS), anti-misting additives and amine synergists.

## Revendications

1. Compositions contenant les composants (I), (II) et éventuellement (III) :
(I) 1 à 90 % en poids, par rapport à la somme de tous les composants de la composition, d'un ou de plusieurs hydrocarbures, constitués par les éléments carbone, hydrogène et oxygène, qui comprennent 2 à 6 groupes éthyléniquement insaturés polymérisables par voie radicalaire et au moins un groupe oxyéthylène,
(II) 10 à 99 % en poids, par rapport à la somme de tous les composants de la composition, d'une ou de plusieurs silicones organo-modifiées contenant 50 à 500, de préférence 60 à 300, de manière davantage préférée 70 à 200, de manière particulièrement préférée 80 à 180 atomes de silicium, 0,4 à 10 %, de préférence 0,6 à 8 %, de manière davantage préférée 0,8 à 7 % des atomes de silicium comprenant des groupes éthyléniquement insaturés polymérisables par voie radicalaire, un atome de silicium pouvant porter un, deux ou trois de ces groupes,
(III) 0 à 70 % en poids, par rapport à la somme de tous les composants de la composition, d'une ou de plusieurs silicones organo-modifiées contenant 4 à 40, de préférence 10 à 30 atomes de silicium, 15 à 100 %, de préférence 20 à 50 %, des atomes de silicium comprenant des groupes éthyléniquement insaturés polymérisables par voie radicalaire, de préférence des fonctions ester d'acide acrylique et/ou méthacrylique,
le composant (I) étant de préférence exempt d'atomes de silicium.

2. Compositions selon la revendication 1, **caractérisées en ce que** le composant (II) comprend en tant que groupes éthyléniquement insaturés polymérisables par voie radicalaire des fonctions ester d'acide acrylique et/ou méthacrylique.

3. Compositions selon la revendication 1, **caractérisées en ce que** le composant (III) contient en plus des groupes éthyléniquement insaturés polymérisables par voie radicalaire également des groupes ester non polymérisables par voie radicalaire.

4. Compositions selon la revendication 2, **caractérisées en ce que** le composant (II) ne comprend pas de groupes ester qui ne sont pas polymérisables par voie radicalaire.

5. Compositions selon la revendication 1, **caractérisées en ce que** le composant (II) est un ou plusieurs composés de formule (I) :
M¹ₐM²_{b}D¹_{c}D²_{d} (I)
avec
M¹ = [R¹₃SiO_{1/2}],
M² = [R¹₂R²SiO_{1/2}]
D¹ = [R¹₂SiO_{2/2}]
D² = [R¹R²SiO_{2/2}]
a = 0 à 2,
b = 0 à 2, avec a + b = 2,
c = 50 à 490, de préférence 60 à 290, de manière davantage préférée 70 à 190, de manière particulièrement préférée 80 à 170,
d = 0 à 15, de préférence 0 à 10,
le rapport entre la somme (b+d) et la somme (c+d+2) étant de 0,004 à 0,1, de préférence de 0,006 à 0,8 et de manière davantage préférée de 0,008 à 0,7 ;
la somme (c+d+2) valant 50 à 500, de préférence 60 à 300, de manière davantage préférée 70 à 200, de manière particulièrement préférée 80 à 180,
R¹ représentant des hydrocarbures aliphatiques identiques ou différents de 1 à 10 atomes de carbone ou des hydrocarbures aromatiques de 6 à 12 atomes de carbone, de préférence des groupes méthyle et/ou phényle, de manière particulièrement préférée des groupes méthyle,
R² représentant des hydrocarbures identiques ou différents, qui comprennent 1 à 5 fonctions ester identiques ou différentes, l'hydrocarbure étant linéaire, cyclique, ramifié et/ou aromatique, de préférence linéaire ou ramifié, les fonctions ester étant choisies parmi les fonctions ester éthyléniquement insaturées polymérisables par voie radicalaire et les groupes ester non polymérisables par voie radicalaire.

6. Compositions selon la revendication 1 ou 2, **caractérisées en ce que** le composant (III) est un composé de formule (II) :
M¹ₑM³_{f}D¹_{g}D³ₕ (II)
avec
M¹ = [R¹₃SiO_{1/2}],
M³ = [R¹₂R³SiO_{1/2}],
D¹ = [R¹₂SiO_{2/2}]
D³ = [R¹R³SiO_{2/2}]
e = 0 à 2,
f = 0 à 2, de préférence zéro, avec e + f = 2,
g = 0 à 38, de préférence 10 à 26,
h = 0 à 20, de préférence 4 à 15,
le rapport entre la somme (f+h) et la somme (g+h+2) étant de 0,15 à 1, de préférence de 0,2 à 0,5,
la somme (g+h+2) valant 4 à 40, de préférence 10 à 30,
les radicaux R¹ étant tels que définis pour la formule (I),
R³ représentant des hydrocarbures identiques ou différents, qui comprennent 1 à 5 fonctions ester identiques ou différentes, l'hydrocarbure étant linéaire, cyclique, ramifié et/ou aromatique, de préférence linéaire ou ramifié, les fonctions ester étant choisies parmi les fonctions ester éthyléniquement insaturées polymérisables par voie radicalaire et les groupes ester non polymérisables par voie radicalaire.

7. Compositions selon au moins l'une quelconque des revendications 1 à 5, **caractérisées en ce que** le composant (III) est nécessairement contenu.

8. Utilisation des compositions selon au moins l'une quelconque des revendications 1 à 6 en tant que matériaux de revêtement durcissant par rayonnement.

9. Utilisation des compositions selon la revendication 7, **caractérisée en ce que** le matériau de revêtement durcissant par rayonnement est un revêtement de séparation.

10. Matériaux de revêtement durcissant par rayonnement contenant des compositions selon au moins l'une quelconque des revendications 1 à 6 et d'autres additifs.

11. Matériaux de revêtement durcissant par rayonnement selon la revendication 9, **caractérisés en ce que** les additifs sont choisis parmi les photoinitiateurs, les photosensibilisateurs, les charges, les pigments, les solvants, les composés contenant du phosphore qui polymérisent sous lumière UV, les stabilisateurs, p. ex. les phosphites ou les photostabilisateurs à base d'amines encombrées (HALS), les additifs antibuée et les synergistes aminés.
